# EUROPEAN PATENT SPECIFICATION

(11) **EP 1 890 229 B1**
(45) Date of publication and mention of the grant of the patent: **11.02.2009**
(21) Application number: 07106624.5
(22) Date of filing: 20.04.2007
(51) Int. Cl.: G06F 9/44

(54) **System controller, data processor, and input output request control method**
Systemcontroller, Datenprozessor und Ein-/Ausgabesteuerverfahren
Controleur de système, processeur de données et procédé de commande d'accès d'entrée/sortie

(30) Priority: 18.08.2006 JP 2006223491
(43) Date of publication of application: 20.02.2008
(73) Proprietor: FUJITSU LIMITED, Kawasaki-shi, Kanagawa 211-8588 (JP)
(72) Inventor: Takahashi, Jin, Kawasaki-shi Kanagawa 211-8588 (JP)
(74) Representative: Stebbing, Timothy Charles

(56) References cited:
- WO-A-03/083664
- US-A1- 2002 091 807
- US-A1- 2003 163 753
- US-A1- 2004 139 294

## Description

The present invention relates to a system controller, a data processor, and an input/output request control method, and, more particularly to a system controller, a data processor, and an input/output request control method which enable normal operation of the data processor even if a failure has occurred in one or more of a plurality of Firmware Hubs (FWH) that are provided in the data processor.

Generally, in a data processor such as a server or a personal computer, a Firmware Hub (hereinafter, "FWH") stores therein firmware such as a Basic Input/Output System (BIOS) program which is software that activates an Operating System (OS) and controls various devices and a Power On Self Test (POST) program that checks the presence of any abnormality in various devices during power activation (for example, see International Laid-open Pamphlet No. 03/083664).

During activation of the data processor, a Central Processing Unit (CPU) reads the BIOS program and the POST program that are stored in the FWH. For example, in one type of data processor, a storage area inside the FWH is mapped with a predetermined area in a physical address map that is controlled by a system controller. The CPU accesses the predetermined area to read the BIOS program and the POST program.

However, recently, due to a demand for enhancement of performance and availability, data processors are widely used which include a plurality of mounted system boards (hereinafter, "System Boards (SB)") that can execute calculation processes. Connecting the system boards using buses or a switch operates the data processor.

The data processor having the structure mentioned earlier includes the FWH for each system board. However, if an inconsistency occurs in a content of the FWH of each system board or if the content of the FWH of a part of the system boards is damaged, the entire data processor or some of the system boards are not activated normally, causing significant interference in the operation of a data processing system.

US 2003/0163753 A1 describes a method of recovering from basic input/output system (BIOS) corruption operating in a multi-node computer system (MCS). The MCS includes first and second nodes, a first firmware unit in the first node, and a second firmware unit in the second node. According to the method, in response to initiation of a boot sequence for the MCS, the MCS automatically checks a BIOS image in the first firmware unit in the first node for corruption. In response to detecting corruption of the BIOS image in the first firmware unit, the MCS automatically recovers from the corruption by causing a good BIOS image to be copied from the second firmware unit in the second node to the first firmware unit in the first node. In one example embodiment, the MCS may contain multiple nodes, and the MCS may automatically recover from BIOS errors if any node contains a good BIOS image.

The present invention is defined in the attached independent claims to which reference should now be made. Further, preferred features may be found in the sub-claims appended thereto.

According to an aspect of the present invention, a system controller arranged to control an input/output request that can be received from any one of a central processing unit (CPU) and other system controller of a data processor in which the system controller is provided, includes an address-map storage unit arranged to store therein an address map wherein areas for accessing a storage unit that stores firmware therein are mapped; and a target determining unit arranged to compare an address included in the input/output request, received from the CPU, with the address map in the address-map storage unit, and if the address is included in an area corresponding to a storage unit that is locally connected to the system controller, to access the locally connected storage unit according to the content of the input/output request, and if the address is included in an area corresponding to a storage unit that is not locally connected to the system controller, to transfer the input/output request to the other system controller.

According to another aspect of the present invention, there is provided a data processor comprising a plurality of system boards, each of the system boards including a central processing unit (CPU), a storage unit that stores firmware, and a system controller, each of the system controllers including an address-map storage unit that stores therein an address map wherein areas for accessing the storage units in the data processor are mapped, and a target determining unit that compares an address included in the input/output request, which is received from own CPU, with the address map in own address-map storage unit, and if the address is included in an area corresponding to a storage unit that is locally connected to the system controller, accesses the locally connected storage unit according to the content of the input/output request, and if the address is included in an area corresponding to a storage unit that is not locally connected to the system controller, transfers the input/output request to another system controller.

According to still another aspect of the present invention, there is provided a method of controlling an input/output request to a storage unit that stores therein firmware by a system controller, including receiving the input/output request from any one of a central processing unit (CPU) and another system controller of a data processor in which the system controller is mounted; comparing, upon receiving the input/output request from the CPU, an address included in the input/output request with an address map wherein areas for accessing the storage unit in the data processor are mapped; accessing, upon deciding at the comparing step that the address is included in an area corresponding to a storage unit that is locally connected to the system controller, the locally connected storage unit according to a content of the input/output request; and transferring, upon deciding at the comparing that the address is included in an area corresponding to a storage unit that is not connected locally to the system controller, the input/output request to another system controller in the data processor.

The above and other features, advantages and technical and industrial significance of this invention will be better understood by reading the following detailed description of presently preferred embodiments of the invention, when considered in connection with the accompanying drawings, in which:
Fig. 1 is a schematic for explaining an address mapping method according to an embodiment of the present invention;
Fig. 2 is a functional block diagram of an example of a data processor that uses the address mapping method according to the embodiment;
Fig. 3 is a schematic for explaining the routes that are used to access an FWH via a local FWH area;
Fig. 4 is a schematic for explaining the routes that are used to access the FWH via a partition FWH area;
Fig. 5 is a functional block diagram of a system controller according to the embodiment;
Fig. 6 is a flowchart of a process procedure performed by the system controller when the system controller receives a request packet from a CPU;
Fig. 7 is a flowchart of a process procedure performed by the system controller when the system controller receives a request packet from another system controller;
Figs. 8 and 9 are flowcharts of a sequence of an operation when damage in a content of the FWH is detected during activation of the data processor;
Figs. 10 and 11 are flowchart of a sequence of an operation when an inconsistency of a version of a BIOS program is detected during the activation of the data processor; and
Fig. 12 is a schematic for explaining a conventional address mapping method.

Exemplary embodiments of the present invention are explained in detail below with reference to the accompanying drawings.

An address mapping method that is used by a Central Processing Unit (CPU) for accessing a Firmware Hub (FWH) is explained first. The FWH is a storage device, which stores therein a Basic Input/Output System (BIOS) program that is software that activates an Operating System (OS) and controls various devices and a Power On Self Test (POST) program that checks for the presence of any abnormality in various devices during power activation.

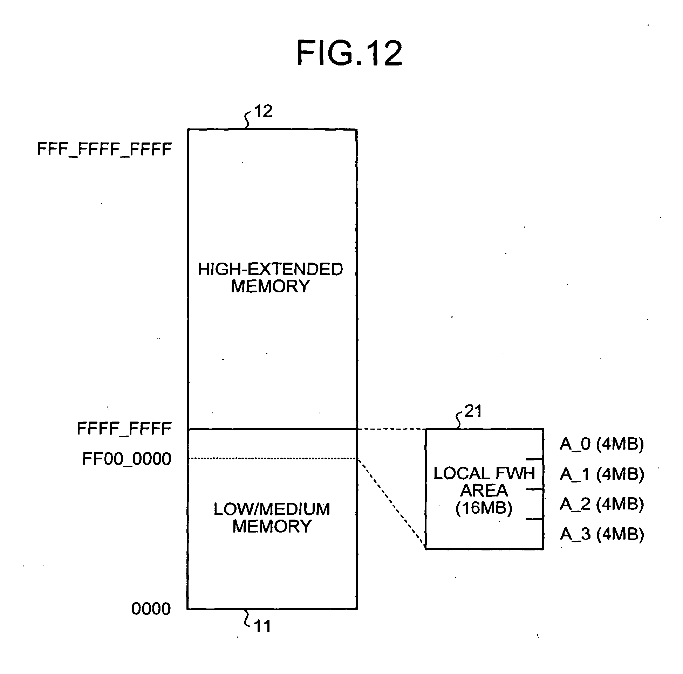

Fig. 12 is a schematic for explaining a conventional address mapping method. In the example shown in Fig. 12, it is assumed that a low/medium memory 11 is 32 bit-addressable and includes 0h to FFFFFFFFh of addressable space. A high-extended memory 12 is a higher-level area than FFFFFFFFh and necessitates more space than 32 bits for addressing. A local FWH area 21, which is an address space used by the CPU for accessing the FWH is allocated at the top of the low/medium memory 11.

In the example shown in Fig. 12, a storage area inside the FWH is split into four partitions. Each partition is assumed to have a storage capacity of 4 megabytes (MB). Due to this, the local FWH area 21 has four partitions A_0 to A_3 that correspond to the four partitions of the storage area inside the FWH. The four partitions A_0 to A_3 include an address space of 4 MB for mapping the corresponding storage area inside the FWH. Thus, the local FWH area 21 includes a total area of 16 MB.

By accessing a predetermined address in any of the partitions A_0 to A_3, the CPU can read from or write to the storage area inside the FWH corresponding to the partition and the address. Thus, in the conventional address mapping method, the storage area inside the FWH is mapped in a physical address map and the CPU accesses the storage area to read computer programs that are stored inside the FWH.

However, the address space corresponding to only one FWH is mapped in the conventional address mapping method and the CPU cannot access the multiple FWH. Due to this, even in a server etc. that includes multiple mounted system boards that include a mounted CPU or a memory, the CPU can access only the FWH on the system board that includes the mounted CPU itself.

In the server which includes the multiple mounted system boards and includes the FWH for each system board, if content of the FWH of any of the system boards becomes damaged or not consistent with the contents of the other FWHs, the entire server or a subset of the system boards are not activated normally, significantly impairing server operation.

If the CPU were able to access the FWHs of the other system boards, any one of the CPUs could copy the content of a normal FWH to another FWH that includes the inaccurate content, thus enabling to normally activate the server. However, because in the conventional address mapping method the CPU cannot access the FWH on the other system boards, such a countermeasure cannot be implemented.

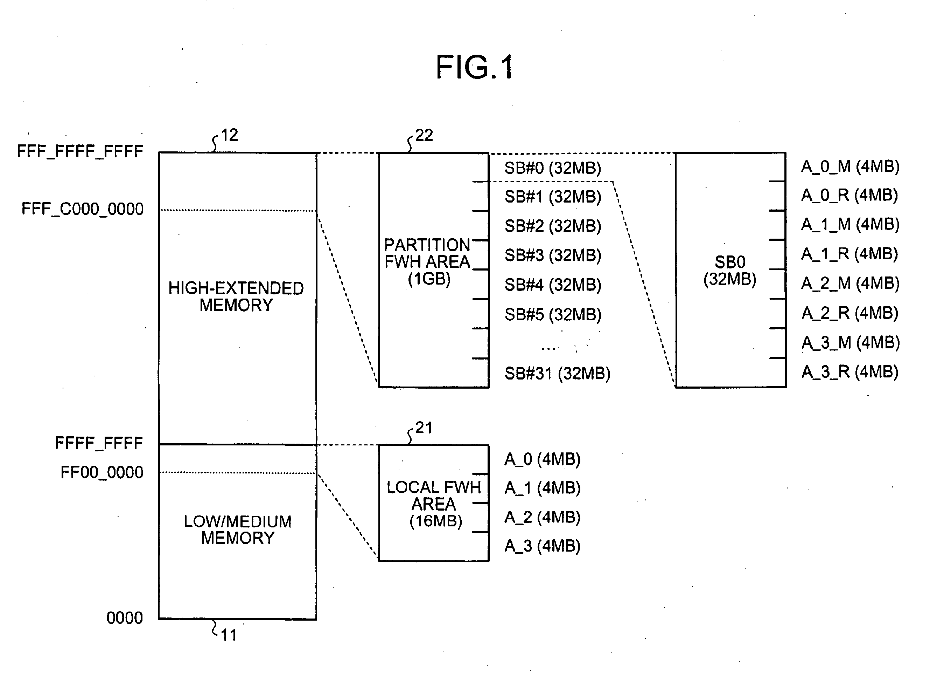

Fig. 1 is a schematic for explaining an address mapping method according to an embodiment of the present invention. As shown in Fig. 1, in the address mapping method according to the embodiment, a partition FWH area 22 is also included in the physical address map in addition to the local FWH area 21. The partition FWH area 22 is the address space that enables the CPU to access the FWH of all the system boards inside the same partition. The partition FWH area 22 is included at the top of the high-extended memory 12.

A partition is a unit that combines the multiple system boards that are mounted on a data processor and causes the multiple system boards to operate as a virtual data processor. In many data processors that enable mounting of the multiple system boards, an internal space is split into a plurality of partitions, and the OS is operated independently in each partition.

In the example shown in Fig. 1, the partition FWH area 22 includes 32 areas SB0 to SB31 and secures the address space for accessing the FWH of a maximum of 32 system boards. Further, each of the areas SB0 to SB31 can access a first FWH consisting of four partitions A_0_M to A_3_M and a second FWH consisting of four partitions A_0_R to A_3_R. For accessing the two FWH, each of the areas SB0 to SB31 includes an address space of 32MB that is twice the address space of the local FWH area 21.

In the address mapping method according to the embodiment, by accessing the partition FWH area 22, the CPU can read from or write to the FWH of the other system boards. Accordingly, if the content of the FWH of a part of the system boards is damaged or if the content of the FWH includes an inconsistency, the CPU can copy the content of the normal FWH to the defective FWH, thus enabling to eliminate the defect.

Locations and sizes of various areas on the physical address map shown in Fig. 1 are merely an example, and can be appropriately modified according to a structure and a specification of the data processor.

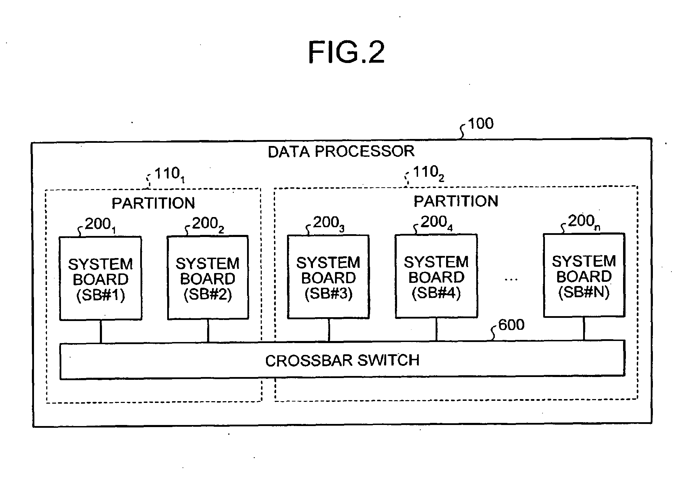

A structure of the data processor that uses the address mapping method according to the embodiment is explained next. Fig. 2 is a functional block diagram of an example of the data processor that uses the address mapping method according to the embodiment.

As shown in Fig. 2, a data processor 100 includes system boards 200₁ to 200ₙ that are connected by a crossbar switch 600. Each of the system boards 200₁ to 200ₙ is an electronic substrate that can independently execute various calculating processes and includes a CPU and a memory. The crossbar switch 600 is a switch used by the system boards 200₁ to 200ₙ for transacting various types of data.

In the example shown in Fig. 2, the system boards 200₁ and 200₂ are included in a partition 110₁ and the system boards 200₂ to 200ₙ are included in a partition 110₂. The partitions 110₁ and 110₂ can operate as separate data processors. For example, the partitions 110₁ and 110₂ can independently carry out activation and termination.

Although not shown in Fig. 2, the data processor 100 also includes a network interface for connecting to a network and an input output interface for connecting to a magnetic disk device.

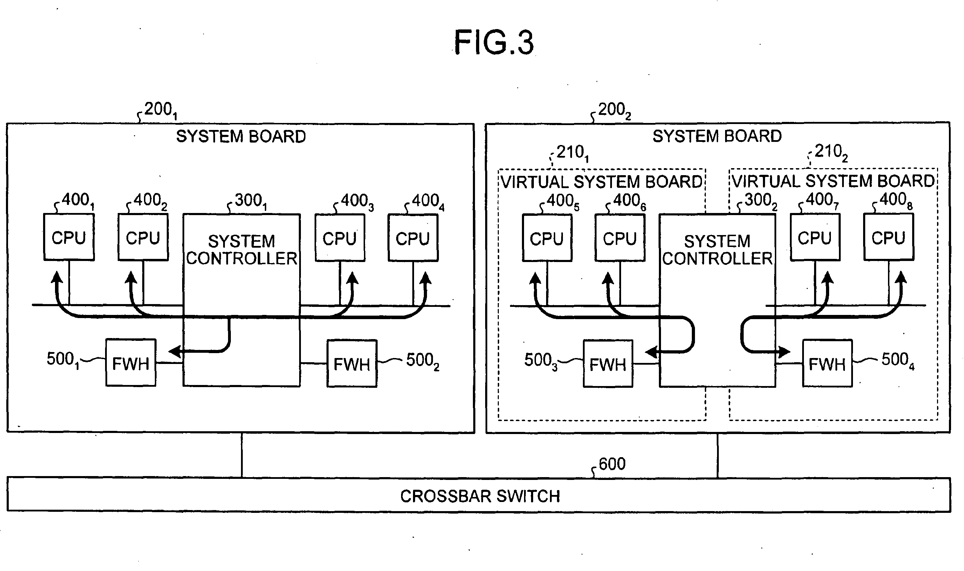

Routes that are used by the CPU on each system board in the partition 110₁ shown in Fig. 1 to access the FWH are explained next. Fig. 3 is a functional block diagram of the routes that are used by the CPU to access the FWH via the local FWH area 21.

A structure of the system board 200₁ is used as an example to explain the structure of the system boards 200₁ to 200ₙ once again. As shown in Fig. 3, the system board 200₁ includes CPU 400₁ to 400₄ that are connected to FWH 500₁ and 500₂ via a system controller 300₁. In the structure shown in Fig. 3, the structure that is not related to the access to the FWH is omitted.

The system controller 300₁ controls the access by the CPU 400₁ to 400₄ to the memory and various devices. To be specific, the system controller 300₁ receives an input output request from the CPU 400₁ to 400₄ to the memory or the devices, and transfers the input output request to an appropriate device. Upon receiving a response from the device, the system controller 300₁ notifies a request source CPU of the response and distributes a response result.

The CPU 400₁ to 400₄ are processors that execute various calculating processes. The FWH 500₁ and 500₂ are storage devices that store the BIOS program, the POST program etc. Thus, although the system board 200₁ includes two FWH, normally only one FWH is used. Each of the system boards 200₁ to 200ₙ can operate as two virtual system boards. The other FWH is used when each of the system boards 200₁ to 200ₙ operates by splitting itself into two virtual system boards.

In the example shown in Fig. 3, the system board 200₂ is split into virtual system boards 210₁ and 210₂. The virtual system board 210₁ includes the CPU 400₅ and 400₆ and the FWH 500₃. The virtual system board 210₂ includes the CPU 400₇ and 400₈ and the FWH 500₄. The virtual system boards 210₁ and 210₂ share the system controller 300₂.

As explained earlier, when accessing the FWH via the local FWH area 21, the CPU can access only one FWH. For example, in the system board 200₁, the CPU 400₁ to 400₄ can access only the FWH 500₁. In the system board 200₂, the CPU 400₅ and 400₆ that are affiliated to (associated with) the virtual system board 210₁ can access only the FWH 500₃ that is similarly affiliated to the virtual system board 210₁. The CPU 400₇ and 400₈ that are affiliated to the virtual system board 210₂ can access only the FWH 500₄ that is similarly affiliated to the virtual system board 210₂.

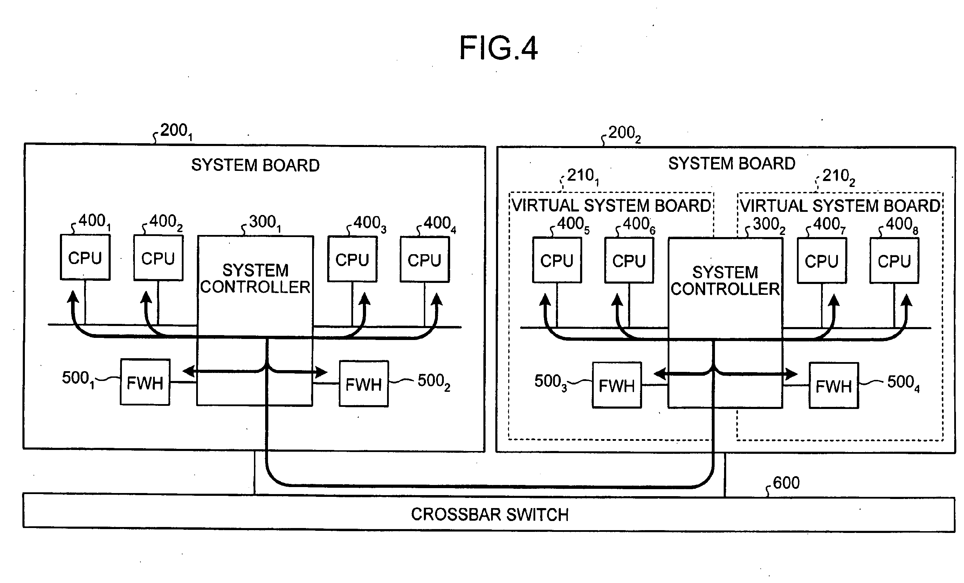

Fig. 4 is a functional block diagram of routes that are used to access the FWH via the partition FWH area 22. As shown in Fig. 4, when accessing the FWH via the partition FWH area 22, each CPU can access all the FWH inside the same partition. For example, the CPU 400₁ can access only the FWH 500₁ via the local FWH area 21, but can access any of the FWH 500₁ to 500₄ via the partition FWH area 22.

Due to requirements of the operation and to ensure security, the data processor explained in the embodiment is structured such that the CPU cannot access the FWH affiliated to other partitions. However, if required, the data processor can also be structured such that the CPU can access the FWH that are affiliated to the other partitions.

Detailed structures of the system controllers 300₁ and 300₂ shown in Fig. 3 are explained next. Because both the system controllers 300₁ and 300₂ include a similar structure, the structure of the system controller 300₁ is explained as an example.

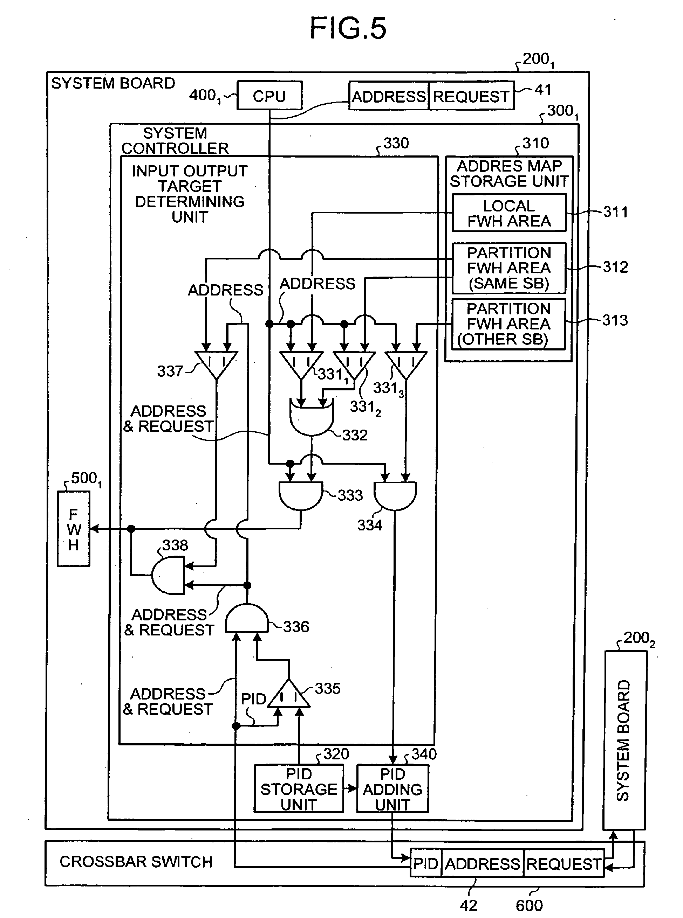

Fig. 5 is a functional block diagram of the system controller 300₁. The system controller 300₁ includes an address map storage unit 310, a partition ID (PID) storage unit 320, an input output target-determining unit 330, and a PID adding unit 340. The structure that is not related to the access to the FWH is omitted from Fig. 5.

The address map storage unit 310 stores therein a correspondence between the areas in the physical address map and the devices and the memory. The address map storage unit 310 stores therein a local FWH area 311, a partition FWH area 312, and a partition FWH area 313.

The local FWH area 311 maintains a range of the address space equivalent to the local FWH area 21 shown in Fig. 1. In the address space equivalent to the partition FWH area 22 shown in Fig. 1, the partition FWH area 312 maintains a range of the address space for accessing the FWH that are mounted on the same system board. In the address space equivalent to the partition FWH area 22 shown in Fig. 1, the partition FWH area 313 maintains a range of the address space for accessing the FWH that are mounted on the other system board.

The PID storage unit 320 stores therein a partition ID, in other words, an identifier of the partition to which the system controller 300₁ is affiliated.

The input output target-determining unit 330 receives the input output request transmitted from the CPU that are mounted on the same system board and the input output request transferred from the system controller that is mounted on the other system board, and determines a target of the requested input output.

To be specific, the system controller 300₁ receives as a request packet 41 the input output request transmitted from the CPU. The request packet 41 includes an address portion that indicates an address of the target that requests the input/output and a request portion that indicates a content of the request. Upon receiving the request packet 41, the input output target-determining unit 330 extracts the address that is set in the address portion and inputs the extracted address into determining circuits 331₁ to 331₃.

The determining circuit 331₁ determines whether the input address is included in the local FWH area 311. The determining circuit 331₂ determines whether the input address is included in the partition FWH area 312. The determining circuit 331₃ determines whether the input address is included in the partition FWH area 313.

If the input address is included in the local FWH area 311 or in the partition FWH area 312, output of the determining circuit 331₁ or the determining circuit 331₂ is switched on (enabled). Due to this, output of an OR circuit 332 which outputs a logical sum of the outputs of the determining circuits 331₁ and 331₂ is switched on. Upon detecting that the output of the OR circuit 332 is switched on and that the request packet 41 has been received, an AND circuit 333 transfers the request packet 41 to the FWH (the FWH 500₁ in the example shown in Fig. 5) that is connected locally.

Thus, if the address, which is set in the address portion of the request packet 41 that is transmitted from the CPU, is included in the local FWH area 311 or the partition FWH area 312, the request packet 41 is transferred to the FWH that is connected locally and an input output process is executed on the FWH.

If the input address is included in the partition FWH area 313, output of the determining circuit 331₃ is switched on. Upon detecting that the output of the determining circuit 331₃ is switched on and that the request packet 41 has been received, an AND circuit 334 transfers the request packet 41 to the other system controller.

The PID adding unit 340 adds the PID that is stored in the PID storage unit 320 to the request packet 41 that is transferred to the other system controller. The PID is added to the request packet 41 to ensure that the input output process is not accidentally executed on the request packet 41 in the other partition. After addition of the PID, the request packet 41 changes to a format of a request packet 42.

Thus, if the address, which is set in the address portion of the request packet 41 that is transmitted from the CPU, is matching with the partition FWH area 313, the request packet 41 is transferred to the other system controller.

The system controller 300₁ receives the input output request transferred from the other system controller as the request packet 42. The request packet 42 includes a PID portion that indicates the PID of the partition to which the transfer source system controller is affiliated, the address portion that indicates the address of the target that requests the input output, and the request portion that indicates the content of the request. Upon receiving the request packet 42, the input output target-determining unit 330 extracts the PID that is set in the PID portion and inputs the extracted PID into a determining circuit 335.

The determining circuit 335 determines whether the input PID matches with the PID that is stored in the PID storage unit 320. If the input PID matches with the PID that is stored in the PID storage unit 320, output of the determining circuit 335 is switched on. Upon detecting that the output of the determining circuit 335 is switched on and that the request packet 42 has been received, an AND circuit 336 outputs the address portion and the request portion of the request packet 42.

The address set in the address portion that is output from the AND circuit 336 is input into a determining circuit 337. The determining circuit 337 determines whether the input address is included in the partition FWH area 312. If the input address is included in the partition FWH area 312, output of the determining circuit 337 is switched on.

Upon detecting that the output of the determining circuit 337 is switched on and that the address portion and the request portion of the request packet 42 are output from the AND circuit 336, an AND circuit 338 transfers the address portion and the request portion to the FWH that is connected locally.

Thus, if the PID which is set in the PID portion of the request packet 42 that is transferred from the other system controller matches with the PID that is stored in the PID storage unit 320 and the address that is set in the address portion is included in the partition FWH area 312, the address portion and the request portion of the request packet 42 are transferred to the FWH that is connected locally and the input output process is executed on the FWH.

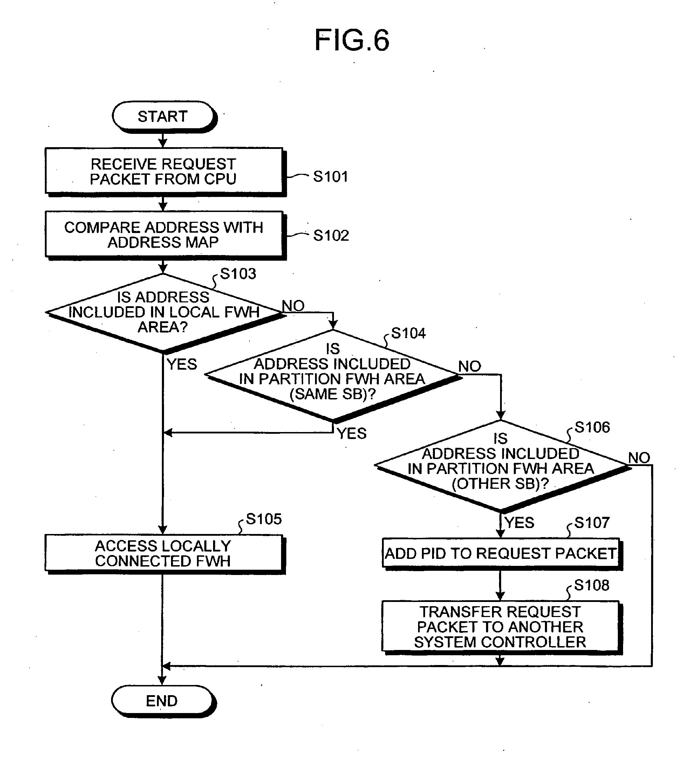

The sequence of processing performed by the system controller 300₁ shown in Fig. 5 is explained next with reference to a flowchart. Fig. 6 is the flowchart of the sequence of processing when the system controller 300₁ has received the request packet 41 from the CPU.

As shown in Fig. 6, upon the system controller 300₁ receiving the request packet 41 that is transmitted from the CPU (step S101), the input output target-determining unit 330 compares the address that is set in the address portion of the request packet 41 with the physical address map that is stored in the address map storage unit 310 (step S102).

If the address that is set in the address portion is included in the local FWH area 311 (Yes at step S103) or in the partition FWH area 312 (No at step S103, Yes at step S104), the input output target-determining unit 330 accesses, according to the content of the request packet 41, the FWH that is connected locally (step S105).

If the address set in the address portion is included in the partition FWH area 313 (No at step S103, No at step S104, Yes at step S106), the PID adding unit 340 adds the PID to the request packet 41 (step S107). After adding the PID, the request packet 41 is transferred to the other system controller (step S108).

If the address set in the address portion is not included in the local FWH area 311, the partition FWH area 312 or the partition FWH area 313, a subsequent process is not described in the flowchart shown in Fig. 6. However, based on a comparison result of the address that is set in the address portion and the physical address map that is stored in the address map storage unit 310, the system controller 300₁ decides the subsequent process.

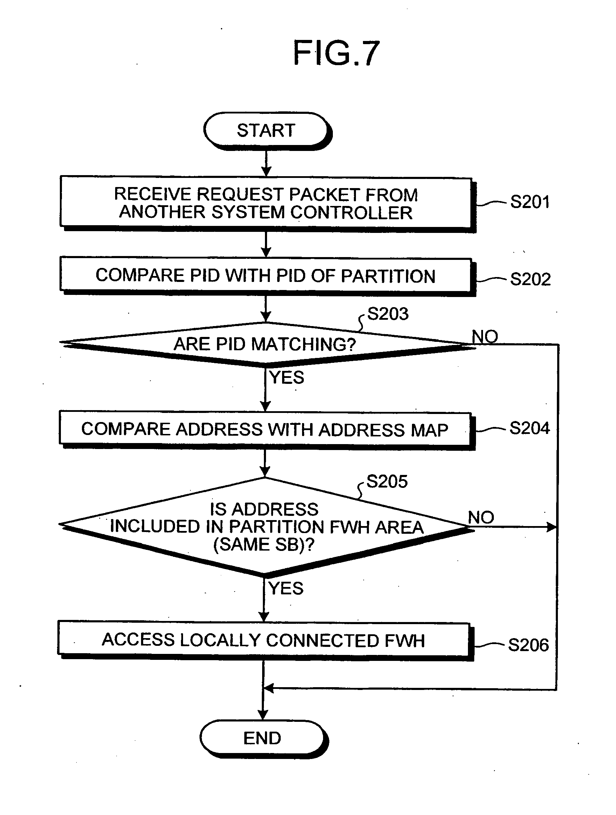

Fig. 7 is a flowchart of a sequence of the process when the system controller 300₁ has received the request packet 42 from the other system controller. As shown in Fig. 7, upon receiving the request packet 42 that is transferred from the other system controller (step S201), the input output target-determining unit 330 compares the PID that is set in the PID portion of the request packet 42 with the PID that is stored in the PID storage unit 320 (step 5202).

If the PID set in the PID portion matches with the PID stored in the PID storage unit 320 (Yes at step S203), the input output target-determining unit 330 compares the address that is set in the address portion of the request packet 42 with the physical address map that is stored in the address map storage unit 310 (step S204).

If the address set in the address portion is included in the partition FWH area 312 (Yes at step S205), the input output target-determining unit 330 accesses, according to the content of the request packet 42, the FWH that is connected locally (step S206).

If the PID set in the PID portion does not match the PID stored in the PID storage unit 320 (No at step S203) or if the address set in the address portion is not included in the partition FWH area 312 (No at step S205), the system controller 300₁ discards the request packet 42.

An operation when the data processor 100 corrects the content of the FWH by using the address mapping method according to the embodiment is explained next. In the operation that is explained below, the three system boards 200₁ to 200₃ are affiliated to the same partition, and the CPU that is mounted on the system board 200₂ controls the entire partition as a representative CPU.

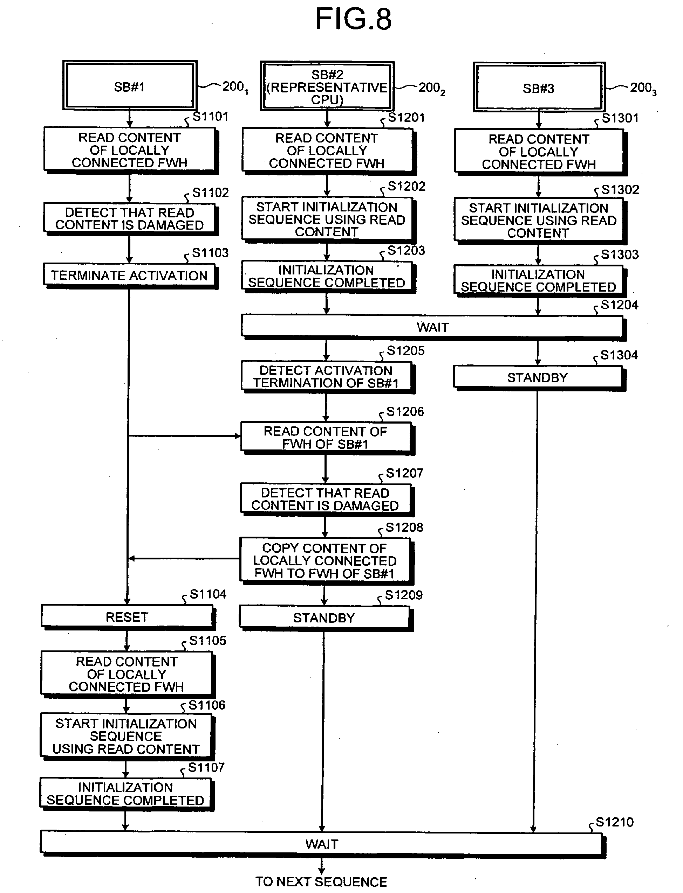

Fig. 8 is a flowchart of an operation when damage to the content of the FWH is detected during activation of the data processor 100. As shown in Fig. 8, in the system board 200₂, after power activation the CPU reads the content of the FWH on the same system board (step S1201), and after start of an initialization sequence using the read BIOS program and the POST program (step S1202), the initialization sequence is completed normally (step S1203).

Similarly, in the system board 200₃, the CPU reads the content of the FWH on the same system board (step S1301) and after start of the initialization sequence using the read BIOS program and the POST program (step S1302), the initialization sequence is completed normally (step S1303).

In the system board 200₁, although the CPU reads the content of the FWH on the same system board (step S1101), upon detecting, based on a check sum, that the read content is damaged (step S1102), the activation is terminated (step S1103).

After the initialization sequence is completed normally, the system boards 200₂ and 200₃ await the completion of the initialization sequence of the other system boards (step S1204). The CPU of the system board 200₂ which is the representative CPU continues to monitor the other system board inside the same partition, and upon detecting that the initialization of the system board 200₁ is not finished even after lapse of a predetermined time period (step S1205), reads the content of the FWH of the system board 200₁ (step S1206).

Based on the check sum, upon detecting that the read content is damaged (step S1207), the CPU of the system board 200₂ copies the content of the locally connected FWH to the FWH of the system board 200₁ and corrects the content of the FWH of the system board 200₁ (step S1208). Next, after issuing a reset instruction to the system board 200₁, the CPU of the system board 200₂ enters a standby state (step S1209).

In the system board 200₁, after executing reset (step S1104) the CPU reads the content of the FWH on the same system board (step S1105) and after start of the initialization sequence using the read BIOS program and the POST program (step S1106) the initialization sequence is completed normally (step S1107). During the initialization sequence in the system board 200₁, the system board 200₃ is in the standby state (step S1304).

After the initialization sequence in all the system boards inside the same partition is completed normally and all the system boards have entered the standby state (step S1210), the partition moves to the next process sequence.

Thus, in the address mapping method according to the embodiment, because the CPU can access the FWH on the other system boards, even if the content of the FWH of one or more of the system boards is damaged, the CPU can correct the content of each such FWH by copying the content of the normal FWH.

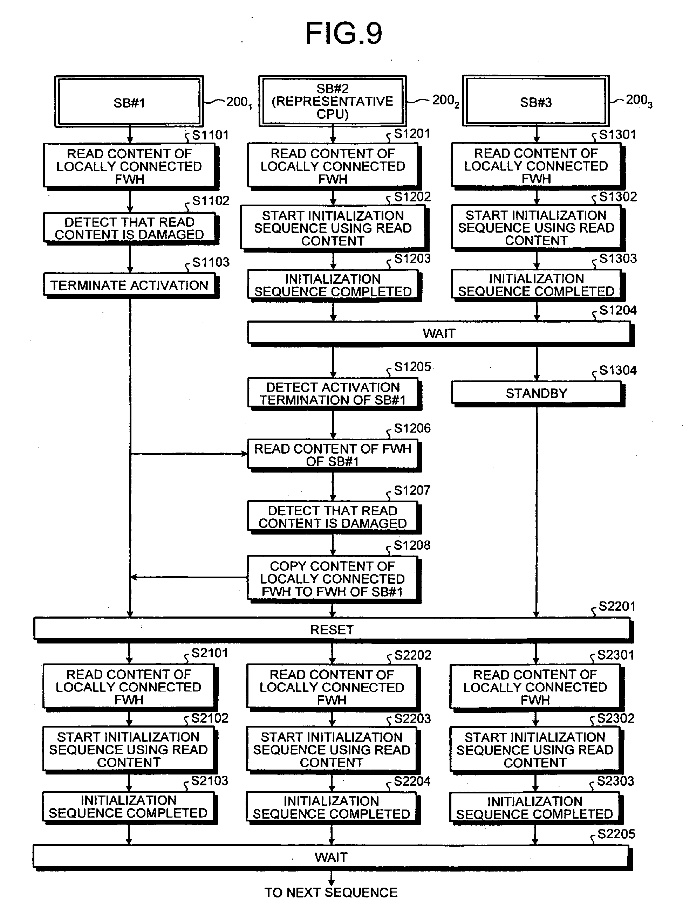

In the example shown in Fig. 8, only the system board that includes the corrected FWH is reset. However, as explained in the example of the operation shown in Fig. 9, after correcting the content of the FWH, the entire partition can also be reset.

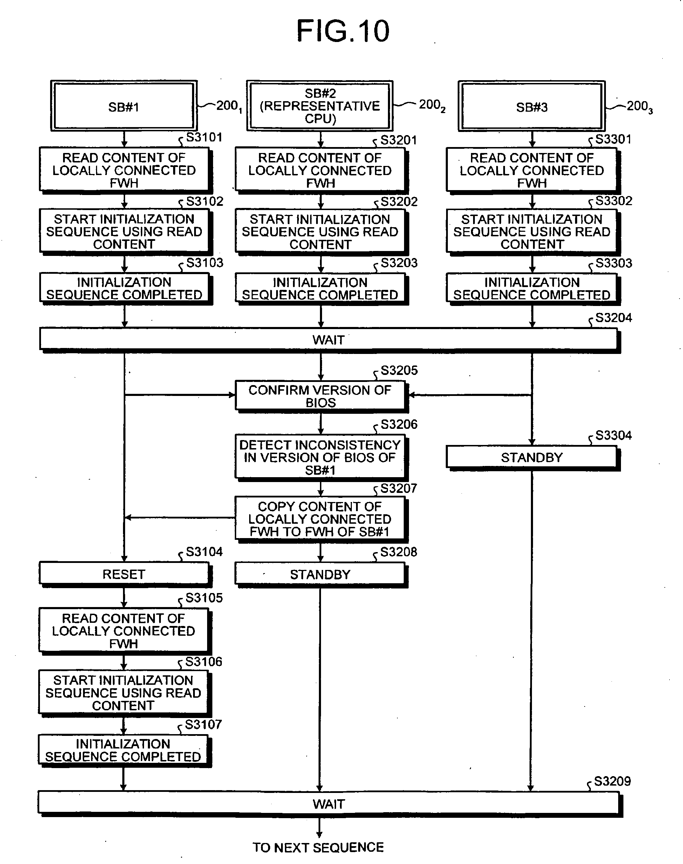

Fig. 10 is a flowchart of a sequence of an operation when an inconsistency of a version of the BIOS program is detected during the activation of the data processor 100. As shown in Fig. 10, after power activation in the system board 200₁, the CPU reads the content of the FWH on the same system board (step S3101) and after start of the initialization sequence using the read BIOS program and the POST program (step S3102), the initialization sequence is completed normally (step S3103).

Similarly, in the system board 200₂, the CPU reads the content of the FWH on the same system board (step S3201) and after start of the initialization sequence using the read BIOS program and the POST program (step S3202) the initialization sequence is completed normally (step S3203).

Similarly, in the system board 200₃, the CPU reads the content of the FWH on the same system board (step S3301) and after start of the initialization sequence using the read BIOS program and the POST program (step S3302) the initialization sequence is completed normally (step S3303).

After the initialization sequence is completed normally, the system boards 200₁, 200₂, and 200₃ await completion of the initialization sequence of the other system boards. After all the system boards have entered the standby state (step S3204), the CPU of the system board 200₂ which is the representative CPU confirms the version of the read BIOS program in the other system boards (step S3205).

The CPU of the system board 200₂ detects that the version of the BIOS program that is read in the system board 200₁ differs from the version of the BIOS program that is read in the other system boards (step S3206).

Next, the CPU of the system board 200₂ copies the content of the locally connected FWH to the FWH of the system board 200₁ and matches the version of the BIOS program stored in the FWH of the system board 200₁ with the version of the BIOS program that is stored in the FWH of the other system boards (step S3207). Next, after issuing the reset instruction to the system board 200₁, the CPU of the system board 200₂ enters the standby state (step S3208).

In the system board 200₁, after executing reset (step S3104) the CPU reads the content of the FWH on the same system board (step S3105) and after start of the initialization sequence using the read BIOS program and the POST program (step S3106) the initialization sequence is completed normally (step S3107). During the initialization sequence in the system board 200₁, the system board 200₃ is in the standby state (step S3304).

After confirming that the initialization sequence in all the system boards inside the same partition is completed normally, that all the system boards have entered the standby state, and that the version of the BIOS program read in all the system boards is the same (step S3209), the partition moves to the next process sequence.

Thus, in the address mapping method according to the embodiment, because the CPU can access the FWH on the other system boards, even if an inconsistency occurs between the content of the FWH of a part of the system boards and the content of the FWH of the other system boards, the CPU can correct the content of the FWH by copying the content of the normal FWH.

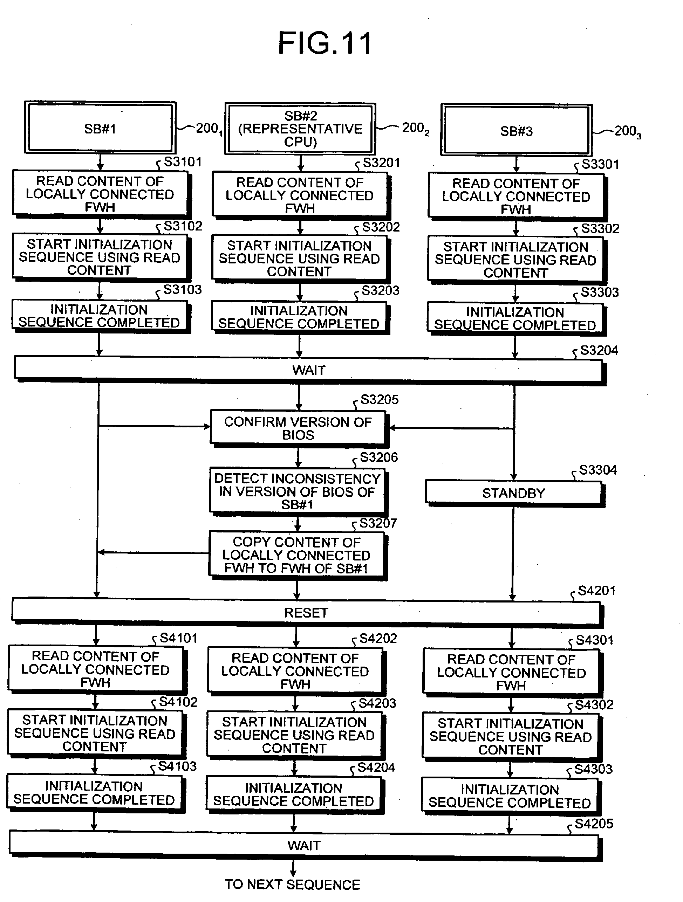

In the example shown in Fig. 10, after correcting the content of the FWH, only the system board that includes the corrected FWH is reset. However, as explained in the example of the operation shown in Fig. 11, after correcting the content of the FWH, the entire partition can also be reset.

In the embodiment, areas for accessing the FWH mounted inside the same data processor are included on the address map. Upon receiving the input output request from the CPU, the system controller refers to the address map. If the target of the input output request is an FWH other than the locally connected FWH, the system controller transfers the input output request to the other system controller. Thus, the CPU can access all the FWH that are mounted inside the same data processor.

Application of the present invention to a data processor that is split into the multiple partitions has been explained in the above embodiment. However, the present invention can also be effectively applied to a data processor that is not split into partitions. Further, apart from a data processor that includes the multiple system boards, the present invention can also be effectively applied to a data processor that includes multiple system controllers and FWH mounted on a single system board.

The embodiment is explained on the assumption that the FWH is used as the storage device that stores therein firmware such as the BIOS program. However, firmware such as the BIOS program etc. can also be stored in storage devices other than the FWH.

According to an aspect of the present invention, areas for accessing FWH mounted inside the same data processor are included in an address map. Upon receiving an input output request from a CPU, a system controller refers to the address map. If a target of the input output request is an FWH other than a locally connected FWH, the system controller transfers the input output request to another system controller. Thus, the CPU can access all the FWH that are mounted inside the same data processor.

According to another aspect of the present invention, upon receiving the input output request that is transferred from another system controller, the system controller refers to the address map. If the target of the input output request is the locally connected FWH, the system controller accesses the locally connected FWH according to the content of the input output request. Thus, due to a coordinating operation of the system controllers, the CPU can access all the FWH that are mounted inside the same data processor.

According to still another aspect of the present invention, upon receiving the input output request from the system controller that is affiliated to another partition, the system controller discards the input output request. Thus, accidental processing of the input output request that is issued in another partition can be prevented.

According to still another aspect of the present invention, if the content of a part of the FWH is damaged, the content of the FWH is corrected by copying the content of a normal FWH. Thus, occurrence of interference in an operation of the data processor due to the damage in the content of a part of the FWH can be prevented.

According to still another aspect of the present invention, if an inconsistency has occurred in the content of a part of the FWH, the content of the FWH is corrected by copying the content of the normal FWH. Thus, occurrence of interference in the operation of the data processor due to the damage in the content of a part of the FWH can be prevented.

Although the invention has been described with respect to a specific embodiment for a complete and clear disclosure, the appended claims are not to be thus limited but are to be construed as embodying all modifications and alternative constructions that may occur to one skilled in the art that fairly fall within the basic teaching herein set forth.

## Claims

1. A system controller (300) that controls an input output request that can be received from any one of a central processing unit (CPU) (400) and other system controller of a data processor in which the system controller is mounted, **characterised in that** the system controller comprises:
an address-map storage unit (310) that stores therein an address map wherein areas for accessing a storage unit that stores therein a firmware are mapped; and
a target determining unit (330) that compares an address included in the input output request, received from the CPU, with the address map in the address-map storage unit, and
if the address is included in an area corresponding to a storage unit that is locally connected to the system controller, accesses the locally connected storage unit according to a content included in the input output request, and
if the address is included in an area corresponding to a storage unit that is not locally connected to the system controller, transfers the input output request to the other system controller.

2. The system controller according to claim 1, wherein the target determining unit compares the input output request, which is received from the other system controller, the address included in the input output request with the address map in the address-map storage unit and, if the address is included in the area corresponding to the storage unit that is locally connected to the system controller, accesses the locally connected storage unit according to the content included in the input output request.

3. The system controller according to claim 2, further comprising a partition identifier adding unit (340) that adds, upon the data processor is split into partitions, an identifier of a partition whereto the system controller is affiliated, to the input output request that is to be transferred to the other system controller by the target determining unit, wherein
the target determining unit discards a input output request if an identifier of a partition is included in the input output request that is received from the other system controller and if the identifier differs from an identifier of a partition whereto the system controller is affiliated.

4. A data processor comprising a plurality of system boards, each of the system board including a central processing unit (CPU) (400), a storage unit that stores therein a firmware (500), and a system controller (300), **characterised in that** each of the system controllers includes
an address-map storage unit (310) that stores therein an address map wherein areas for accessing the storage units in the data processor are mapped; and
a target determining unit (330) that compares an address included in the input output request, which is received from own CPU, with the address map in own address-map storage unit, and
if the address is included in an area corresponding to a storage unit that is locally connected to the system controller, accesses the locally connected storage unit according to a content included in the input output request, and
if the address is included in an area corresponding to a storage unit that is not locally connected to the system controller, transfers the input output request to other system controller.

5. The data processor according to claim 4, wherein the target determining unit compares, which is received from the other system controller, the address included in the input output request with the address map in the address-map storage unit and, if the address is included in the area corresponding to the storage unit that is locally connected to the system controller, accesses the locally connected storage unit according to the content included in the input output request.

6. The data processor according to claim 5, wherein
each of the system controllers further includes a partition identifier adding unit (340) that adds, upon the data processor whereon the system controller is mounted is split into partitions, an identifier of a partition whereto the system controller is affiliated, to the input output request that is to be transferred to the other system controller by the target determining unit, and
the target determining unit discards a input output request if an identifier of the partition is included in the input output request that is received from the other system controller and if the identifier differs from an identifier of a partition whereto the system controller is affiliated.

7. The data processor according to claim 4, wherein the CPU transmits to a system controller that is connected locally, upon detecting that content of a first storage unit in the data processor is damaged,
an input output request for reading content of a second storage unit in the data processor, and
an input output request for writing the content read from the second storage unit to the first storage unit.

8. The data processor according to claim 4, wherein the CPU transmits to a system controller that is connected locally, upon detecting that an inconsistency has occurred between content of a first storage unit and content of other storage units in the data processor,
an input output request for reading the content of a second storage unit in the data processor, and
an input output request for writing the content read from the second storage unit to the first storage unit.

9. A method of controlling an input output request to a storage (500) unit that stores therein a firmware by a system controller (300), **characterised in that** the method comprises:
receiving the input output request from any one of a central processing unit (CPU) (400) and other system controller of a data processor in which the system controller is mounted;
comparing, upon receiving the input output request from the CPU, an address included in the input output request with an address map wherein areas for accessing the storage unit in the data processor are mapped;
accessing, upon it is decided at the comparing that the address is included in an area corresponding to a storage unit that is locally connected to the system controller, the locally connected storage unit according to a content of the input output request; and
transferring, upon it is decided at the comparing that the address is included in an area corresponding to a storage unit that is not connected locally to the system controller, the input output request to other system controller in the data processor.

10. The method according to claim 9, wherein the comparing includes comparing the input output request, which is received from the other system controller, the address included in the input output request with the address map, and
the accessing includes accessing, if the address is included in the area corresponding to the storage unit that is locally connected to the system controller, the locally connected storage unit according to the content included in the input output request.

11. The method according to claim 10, further comprising
adding, upon the data processor is split into partitions, an identifier of a partition whereto the system controller is affiliated, to the input output request that is to be transferred to the other system controller at the transferring; and
discarding a input output request if an identifier of a partition is included in the input output request that is received from the other system controller and if the identifier differs from an identifier of a partition whereto the system controller is affiliated.

## Patentansprüche

1. Systemcontroller (300), der eine Eingabe/Ausgabe-Aufforderung steuert, die von einer zentralen Verarbeitungseinheit (CPU) (400) oder einem anderen Systemcontroller eines Datenprozessors, in den der Systemcontroller montiert ist, empfangen werden kann, **dadurch gekennzeichnet, dass** der Systemcontroller umfasst:
eine Adressenabbildungsspeichereinheit (310), in der eine Adressenabbildung gespeichert ist, worin Bereiche für das zugreifen auf eine Speichereinheit, in der eine Firmware gespeichert ist, abgebildet sind; und
eine Zielbestimmungseinheit (330), die eine Adresse, die in der Eingabe/Ausgabe-Aufforderung enthalten ist, die von der CPU empfangen wurde, mit der Adressenabbildung in der Adressenabbildungsspeichereinheit vergleicht und,
falls die Adresse in einem Bereich entsprechend einer Speichereinheit enthalten ist, die mit dem Systemcontroller lokal verbunden ist, auf die lokal verbundene Speichereinheit gemäß einem in der Eingabe/Ausgabe-Aufforderung enthaltenen Inhalt zugreift und,
falls die Adresse in einem Bereich entsprechend einer Speichereinheit enthalten ist, die mit dem Systemcontroller nicht lokal verbunden ist, die Eingabe/Ausgabe-Aufforderung zu dem anderen Systemcontroller überträgt.

2. Systemcontroller nach Anspruch 1, bei dem die Zielbestimmungseinheit die Eingabe/Ausgabe-Aufforderung, die von dem anderen Systemcontroller empfangen wurde, die Adresse, die in der Eingabe/Ausgabe-Aufforderung enthalten ist, mit der Adressenabbildung in der Adressenabbildungsspeichereinheit vergleicht und, falls die Adresse in dem Bereich entsprechend der Speichereinheit enthalten ist, die mit dem Systemcontroller lokal verbunden ist, auf die lokal verbundene Speichereinheit gemäß dem in der Eingabe/Ausgabe-Aufforderung enthaltenen Inhalt zugreift.

3. Systemcontroller nach Anspruch 2, ferner mit einer Partitionsidentifikatorhinzufügungseinheit (340), die bei Teilung des Datenprozessors in Partitionen einen Identifikator einer Partition, an die der Systemcontroller angegliedert ist, zu der Eingabe/Ausgabe-Auffordcrung hinzufügt, die durch die Zielbestimmungseinheit zu dem anderen Systemcontroller zu übertragen ist, bei dem
die Zielbestimmungseinheit eine Eingabe/Ausgabe-Aufforderung aussondert, falls ein Identifikator einer Partition in der Eingabe/Ausgabe-Aufforderung enthalten ist, die von dem anderen Systemcontroller empfangen wurde, und falls sich der Identifikator von einem Identifikator einer Partition unterscheidet, an die der Systemcontroller angegliedert ist.

4. Datenprozessor mit einer Vielzahl von Systemplatinen, von welchen Systemplatinen jede eine zentrale Verarbeitungseinheit (CPU) (400), eine Speichereinheit, in der eine Firmware (500) gespeichert ist, und einen Systemcontroller (300) enthält, **dadurch gekennzeichnet, dass** jeder der Systemcontroller enthält:
eine Adressenabbildungsspeichereinheit (310), in der eine Adressenabbildung gespeichert ist, worin Bereiche für das Zugreifen auf die Speichereinheiten in dem Datenprozessor abgebildet sind; und
eine Zielbestimmungseinheit (330), die eine Adresse, die in der Eingabe/Ausgabe-Aufforderung enthalten ist, die von der eigenen CPU empfangen wurde, mit der Adressenabbildung in der eigenen Adressenabbildungsspeichereinheit vergleicht und,
falls die Adresse in einem Bereich entsprechend einer Speichereinheit enthalten ist, die mit dem Systemcontroller lokal verbunden ist, auf die lokal verbundene Speichereinheit gemäß einem in der Eingabe/Ausgabe-Aufforderung enthaltenen Inhalt zugreift und,
falls die Adresse in einem Bereich entsprechend einer Speichereinheit enthalten ist, die mit dem Systemcontroller nicht lokal verbunden ist, die Eingabe/Ausgabe-Aufforderung zu einem anderen Systemcontroller überträgt.

5. Datenprozessor nach Anspruch 4, bei dem die Zielbestimmungseinheit die Adresse, die in der Eingabe/Ausgabe-Aufforderung enthalten ist, die von dem anderen Systemcontroller empfangen wurde, mit der Adressenabbildung in der Adressenabbildungsspeichereinheit vergleicht und, falls die Adresse in dem Bereich entsprechend der Speichereinheit enthalten ist, die mit dem Systemcontroller lokal verbunden ist, auf die lokal verbundene Speichereinheit gemäß dem in der Eingabe/Ausgabe-Aufforderung enthaltenen Inhalt zugreift.

6. Datenprozessor nach Anspruch 5, bei dem
jeder der Systemcontroller ferner eine Partitionsidentifikatorhinzufügungseinheit (340) enthält, die bei Teilung des Datenprozessors, in den der Systemcontroller montiert ist, in Partitionen einen Identifikator einer Partition, an die der Systemcontroller angegliedert ist, zu der Eingabe/ Ausgabe-Aufforderung hinzufügt, die durch die Zielbestimmungseinheit zu dem anderen Systemcontroller zu übertragen ist, und
die Zielbestimmungseinheit eine Eingabe/Ausgabe-Aufforderung aussondert, falls ein Identifikator der Partition in der Eingabe/Ausgabe-Aufforderung enthalten ist, die von dem anderen Systemcontroller empfangen wurde, und falls sich der Identifikator von einem Identifikator einer Partition unterscheidet, an die der Systemcontroller angegliedert ist.

7. Datenprozessor nach Anspruch 4, bei dem die CPU an einen Systemcontroller, der lokal verbunden ist, beim Detektieren, dass der Inhalt einer ersten Speichereinheit in dem Datenprozessor beschädigt ist,
eine Eingabe/Ausgabe-Aufforderung zum Lesen des Inhaltes einer zweiten Speichereinheit in dem Datenprozessor und
eine Eingabe/Ausgabe-Aufforderung zum Schreiben des von der zweiten Speichereinheit gelesenen Inhaltes in die erste Speichereinheit sendet.

8. Datenprozessor nach Anspruch 4, bei dem die CPU an einen Systemcontroller, der lokal verbunden ist, beim Detektieren, dass eine Unstimmigkeit zwischen dem Inhalt einer ersten Speichereinheit und dem Inhalt von anderen Speichereinheiten in dem Datenprozessor aufgetreten ist,
eine Eingabe/Ausgabe-Aufforderung zum Lesen des Inhaltes einer zweiten Speichereinheit in dem Datenprozessor und
eine Eingabe/Ausgabe-Aufforderung zum Schreiben des von der zweiten Speichereinheit gelesenen Inhaltes in die erste Speichereinheit sendet.

9. Verfahren zum Steuern einer Eingabe/Ausgabe-Aufforderung für eine Speichereinheit (500), in der eine Firmware gespeichert ist, durch einen Systemcontroller (300), **dadurch gekennzeichnet, dass** das Verfahren umfasst:
Empfangen der Eingabe/Ausgabe-Aufforderung von einer zentralen Verarbeitungseinheit (CPU) (400) oder einem anderen Systemcontroller eines Datenprozessors, in den der Systemcontroller montiert ist;
Vergleichen, bei Empfang der Eingabe/Ausgabe-Aufforderung von der CPU, einer in der Eingabe/Ausgabe-Aufforderung enthaltenen Adresse mit einer Adressenabbildung, worin Bereiche für das Zugreifen auf die Speichereinheit in dem Datenprozessor abgebildet sind;
Zugreifen, nachdem beim Vergleichen entschieden wurde, dass die Adresse in einem Bereich entsprechend einer Speichereinheit enthalten ist, die mit dem Systemcontroller lokal verbunden ist, auf die lokal verbundene Speichereinheit gemäß einem Inhalt der Eingabe/Ausgabe-Aufforderung; und
Übertragen, nachdem beim Vergleichen entschieden wurde, dass die Adresse in einem Bereich entsprechend einer Speichereinheit enthalten ist, die mit dem Systemcontroller nicht lokal verbunden ist, der Eingabe/Ausgabe-Aufforderung zu einem anderen Systemcontroller in dem Datenprozessor.

10. Verfahren nach Anspruch 9, bei dem das Vergleichen das Vergleichen der Eingabe/Ausgabe-Aufforderung, die von dem anderen Systemcontroller empfangen wurde, der Adresse, die in der Eingabe/Ausgabe-Aufforderung enthalten ist, mit der Adressenabbildung enthält und
das Zugreifen, falls die Adresse in dem Bereich entsprechend der Speichereinheit enthalten ist, die mit dem Systemcontroller lokal verbunden ist, das Zugreifen auf die lokal verbundene Speichereinheit gemäß dem in der Eingabe/ Ausgabe-Aufforderung enthaltenen Inhalt enthält.

11. Verfahren nach Anspruch 10, das ferner umfasst:
Hinzufügen, bei Teilung des Datenprozessors in Partitionen, eines Identifikators einer Partition, an die der Systemcontroller angegliedert ist, zu der Eingabe/Ausgabe-Aufforderung, die zu dem anderen Systemcontroller zu übertragen ist, beim Übertragen; und
Aussondern einer Eingabe/Ausgabe-Aufforderung, falls ein Identifikator einer Partition in der Eingabe/Ausgabe-Aufforderung enthalten ist, die von dem anderen Systemcontroller empfangen wurde, und falls sich der Identifikator von einem Identifikator einer Partition unterscheidet, an die der Systemcontroller angegliedert ist.

## Revendications

1. Contrôleur de système (300) qui contrôle une requête d'entrée/sortie qui peut être reçue de la part de n'importe lequel d'une unité centrale de traitement (CPU) (400) et d'un autre contrôleur de système d'un processeur de données dans lequel le contrôleur de système est monté, **caractérisé en ce que** le contrôleur de système comprend :
une unité de stockage de carte d'adresses (310) qui stocke une carte d'adresses sur laquelle des zones d'accès à une unité de stockage qui stocke un firmware sont mappées ; et
une unité de détermination de cible (330) qui compare une adresse incluse dans la requête d'entrée/sortie, reçue de la part de la CPU, avec la carte d'adresses dans l'unité de stockage de carte d'adresses, et
si l'adresse est incluse dans une zone correspondant à une unité de stockage qui est connectée localement au contrôleur de système, accède à l'unité de stockage connectée localement selon un contenu inclus dans la requête d'entrée/sortie, et
si l'adresse est incluse dans une zone correspondant à une unité de stockage qui n'est pas connectée localement au contrôleur de système, transfère la requête d'entrée/sortie à l'autre contrôleur de système.

2. Contrôleur de système selon la revendication 1, dans lequel l'unité de détermination de cible compare la requête d'entrée/sortie, qui est reçue de la part de l'autre contrôleur de système, l'adresse incluse dans la requête d'entrée/sortie avec la carte d'adresses dans l'unité de stockage de carte d'adresses et, si l'adresse est incluse dans la zone correspondant à l'unité de stockage qui est connectée localement au contrôleur de système, accède à l'unité de stockage connectée localement selon le contenu inclus dans la requête d'entrée/sortie.

3. Contrôleur de système selon la revendication 2, comprenant en outre une unité d'ajout d'identifiant de partition (340) qui ajoute, lorsque le processeur de données est séparé en partitions, un identifiant d'une partition à laquelle le contrôleur de système est affilié, à la requête d'entrée/sortie qui doit être transférée vers l'autre contrôleur de système par l'unité de détermination de cible, dans lequel
l'unité de détermination de cible élimine une requête d'entrée/sortie si un identifiant d'une partition est inclus dans la requête d'entrée/sortie qui est reçue de la part de l'autre contrôleur de système et si l'identifiant diffère d'un identifiant d'une partition à laquelle le contrôleur de système est affilié.

4. Processeur de données comprenant une pluralité de cartes système, chacune des cartes système comprenant une unité centrale de traitement (CPU) (400), une unité de stockage qui stocke un firmware (500), et un contrôleur de système (300), **caractérisé en ce que** chacun des contrôleurs de système comprend
une unité de stockage de carte d'adresses (310) qui stocke une carte d'adresses dans laquelle des zones d'accès aux unités de stockage dans le processeur de données sont mappées ; et
une unité de détermination de cible (330) qui compare une adresse incluse dans la requête d'entrée/sortie, qui est reçue de la part de sa CPU, avec la carte d'adresses dans sa propre unité de stockage de carte d'adresses, et
si l'adresse est incluse dans une zone correspondant à une unité de stockage qui est connectée localement au contrôleur de système, accède à l'unité de stockage connectée localement selon un contenu inclus dans la requête d'entrée/sortie, et
si l'adresse est incluse dans une zone correspondant à une unité de stockage qui n'est pas connectée localement au contrôleur de système, transfère la requête d'entrée/sortie vers l'autre contrôleur de système.

5. Processeur de données selon la revendication 4, dans lequel l'unité de détermination de cible compare l'adresse, qui est reçue de la part de l'autre contrôleur de système, incluse dans la requête d'entrée/sortie avec la carte d'adresses dans l'unité de stockage de carte d'adresses et, si l'adresse est incluse dans la zone correspondant à l'unité de stockage qui est connectée localement au contrôleur de système, accède à l'unité de stockage connectée localement selon le contenu inclus dans la requête d'entrée/sortie.

6. Processeur de données selon la revendication 5, dans lequel chacun des contrôleurs de système comprend en outre une unité d'ajout d'identifiant de partition (340) qui ajoute, lorsque le processeur de données sur lequel le contrôleur de système est monté est séparé en partitions, un identifiant d'une partition à laquelle le contrôleur de système est affilié, à la requête d'entrée/sortie qui doit être transférée vers l'autre contrôleur de système par l'unité de détermination de cible, et
l'unité de détermination de cible élimine une requête d'entrée/sortie si un identifiant de la partition est inclus dans la requête d'entrée/sortie qui est reçue de la part de l'autre contrôleur de système et si l'identifiant diffère d'un identifiant d'une partition à laquelle le contrôleur de système est affilié.

7. Processeur de données selon la revendication 4, dans lequel la CPU transmet à un contrôleur de système qui est connecté localement, lors de la détection du fait que le contenu d'une première unité de stockage dans le processeur de données soit endommagé,
une requête d'entrée/sortie permettant de lire le contenu d'une seconde unité de stockage dans le processeur de données, et
une requête d'entrée/sortie permettant d'écrire le contenu lu depuis la seconde unité de stockage vers la première unité de stockage.

8. Processeur de données selon la revendication 4, dans lequel la CPU transmet à un contrôleur de système qui est connecté localement, lors de la détection du fait qu'une incohérence se soit produit entre le contenu d'une première unité de stockage et le contenu d'autres unités de stockage dans le processeur de données,
une requête d'entrée/sortie permettant de lire le contenu d'une seconde unité de stockage dans le processeur de données, et
une requête d'entrée/sortie permettant d'écrire le contenu lu depuis la seconde unité de stockage vers la première unité de stockage.

9. Procédé de contrôle d'une requête d'entrée/sortie vers une unité de stockage (500) qui stocke un firmware à l'aide d'un contrôleur de système (300), **caractérisé en ce que** le procédé comprend :
la réception de la requête d'entrée/sortie de la part de n'importe lequel d'une unité centrale de traitement (CPU) (400) et d'un autre contrôleur de système d'un processeur de données dans lequel le contrôleur de système est monté ;
la comparaison, lors de la réception de la requête d'entrée/sortie de la part de la CPU, d'une adresse incluse dans la requête d'entrée/sortie avec une cadre d'adresses dans laquelle des zones d'accès à l'unité de stockage dans le processeur de données sont mappées ;
l'accès, lorsqu'il est décidé lors de la comparaison que l'adresse est incluse dans une zone correspondant à une unité de stockage qui est connectée localement au contrôleur de système, à l'unité de stockage connectée localement selon un contenu de la requête d'entrée/sortie ; et
le transfert, lorsqu'il est décidé lors de la comparaison que l'adresse est incluse dans une zone correspondant à une unité de stockage qui n'est pas connectée localement au contrôleur de système, de la requête d'entrée/sortie vers un autre contrôleur de système dans le processeur de données.

10. Procédé selon la revendication 9, dans lequel la comparaison comprend la comparaison de la requête d'entrée/sortie, qui est reçue de la part de l'autre contrôleur de système, de l'adresse incluse dans la requête d'entrée/sortie avec la carte d'adresses, et
l'accès comprend l'accès, si l'adresse est incluse dans la zone correspondant à l'unité de stockage qui est connectée localement au contrôleur de système, à l'unité de stockage connectée localement selon le contenu inclus dans la requête d'entrée/sortie.

11. Procédé selon la revendication 10, comprenant en outre l'ajout, lorsque le processeur de données est séparé en partitions, d'un identifiant d'une partition à laquelle le contrôleur de système est affilié, à la requête d'entrée/sortie qui doit être transférée vers l'autre contrôleur de système lors du transfert ; et
l'élimination d'une requête d'entrée/sortie si un identifiant d'une partition est inclus dans la requête d'entrée/sortie qui est reçue de la part de l'autre contrôleur de système et si l'identifiant diffère d'un identifiant d'une partition à laquelle le contrôleur de système est affilié.
